# EUROPEAN PATENT SPECIFICATION

(11) **EP 1 612 129 B1**
(45) Date of publication and mention of the grant of the patent: **05.06.2019**
(21) Application number: 05014224.9
(22) Date of filing: 30.06.2005
(51) Int. Cl.: B62J 6/18, B60Q 1/00, B62J 6/02

(54) **Headlight for astride riding type vehicles**
Scheinwerfer für ein im Grätschsitz zu benutzendes Fahrzeug
Phare pour véhicule de type monté à califourchon

(30) Priority: 30.06.2004 JP 2004192866
(43) Date of publication of application: 04.01.2006
(73) Proprietor: Yamaha Hatsudoki Kabushiki Kaisha, Iwata-shi, Shizuoka-ken (JP)
(72) Inventor: Kobayashi, Yasuyuki, Iwata-shi Shizuoka-ken (JP)
(74) Representative: Grünecker Patent- und Rechtsanwälte PartG mbB

(56) References cited:
- DE-C- 615 475
- JP-A- 2002 337 774
- US-A1- 2002 024 810
- US-A1- 2004 114 389

## Description

The present invention relates to a headlight for astride riding type vehicles according to the preamble of independent claim 1. Such a headlight can be taken from JP-A-2002-33774**.**

In JP-A-2002-337774, there is disclosed a headlight-mounting structure for motorcycles, capable of reducing the number of parts and of effecting an integrated feeling in design around the headlight. The headlight-mounting structure for a motorcycle in which a steering handle is supported by a handle holder provided on a handle crown for connecting upper ends of left and right fork bodies of a front fork to each other, and in which a headlight is mounted near the support section of the steering handle, wherein said headlight is mounted to the handle crown through a meter housing for housing meters dispose in front of the handle crown.

Also document DE 615 475 C discloses a prior art headlight for motorcycles.

Recent years, this kind of headlight has been provided with a plurality of bulbs such as low beam/high beam/position lights. Additional bulbs are called position bulbs, which are expected to improve the position of a motorcycle, that is, visibility from other vehicles, and which are intended for the improvement in design as well.

In the past, no lead wires from each bulb to be fixed to the headlight body, were fixed to the headlight body, but they are extended from the headlight body directly to the contact points on the body side. In that case, there were lines such as a clutch hose, a throttle wire and brake hoses intermingled around the handle shaft, and even if a new arrangement of lead wires from the headlight body was invented to keep clear of these intermingled lines, there was the possibility of the handle shaft interfering with lead wires from the headlight when the steering handle was operated. Therefore, the headlight body was disposed away from the steering handle as far as possible to secure a required space and the headlight body has been fixed to a vehicle body such that lead wires from the headlight body were accommodated in the space. The attempt of accommodating the lead wires from the bulbs in the headlight body results in a thicker headlight body.

In either case, a problem is raised that the moment of inertia around the handle shaft is increased because of the center of gravity falling in a position distant from the handle. Also, this kind of headlight assembly did not give a good external appearance.

In order to solve the foregoing problems, an object of the invention is to provide a headlight for astride riding type vehicles, particularly for motorcycles, as indicated above in which lead wires from the bulbs are effectively accommodated in a headlight body and the headlight body can be formed thinn, thus capable of effecting improvement in the operating property of a steering handle without intermingling with other lines even if the headlight body is fixed to a vehicle body so as to be closer to the steering handle.

According to the present invention, said object is solved by a headlight for astride riding type vehicles having the features of independent claim 1. Preferred embodiments are laid down in the dependent claims.

Accordingly, it is provided a headlight for astride riding vehicles, in particular for motorcycles, having a headlight body supporting at least one bulb, wherein the bulb in the headlight body is connected to an electric connector on a vehicle body side by lead wires, said lead wires being fixed to a rear face of the headlight body in an allowance portion being formed along a periphery of a protruded portion on the rear side.

Preferably, the headlight body is fixed in front of a steering handle and supports a plurality of bulbs and a lens, wherein said headlight body is adapted to support said plurality of bulbs towards said lens, and wherein said lead wires from said bulbs are led out from said headlight body to be connected to electric contact points on a vehicle body.

Further, preferably in the rear face of said headlight body, there are provided a plurality of protruded regions for said bulbs to be accommodated in the headlight body, and in that in the allowance portion which is on the periphery of a protruded region having a largest area and which does not interfere with other protruded regions, lead wires from a main bulb and those from other bulbs are disposed running in one direction, said plurality of lead wires being bound together to form a collective line, and the connector is coupled to the end of the collective line on said body side, so that the connector is connected to said electric contact points on the body side. Therein, it is still further preferable if said main bulb is a bulb for a low beam.

According to a preferred embodiment, there is provided a position bulb in addition to said bulb for a low beam, wherein lead wires from the position bulb are laid toward said allowance portion through a recessed portion in the rear face of said headlight body.

Therein, it is beneficial if said position bulb is provided above said bulb for a low beam, wherein lead wires from the position bulb are hung downwardly along said allowance portion and bound to said second collective line.

According to a further preferred embodiment, there is provided a fixing piece for fixing said lead wires to said allowance portion, being provided at a position facing said allowance portion in the rear face of said headlight body.

According to still another embodiment, there is provided a common terminal used when the plurality of lead wires are bound together, so that the number of lead wires of the collective line is smaller than that of all the lead wires.

In the following, the present invention is explained in greater detail with respect to several embodiments thereof in conjunction with the accompanying drawings, wherein:
- Fig. 1: is a general view of a motorcycle with a headlight;
- Fig. 2: is a detailed view of a mounting section of the headlight to a vehicle body;
- Fig. 3: is a front view of the headlight;
- Fig. 4: is a bottom view of the headlight;
- Fig. 5: is a side view of the headlight;
- Fig. 6: is a sectional view corresponding to Fig. 5;
- Fig. 7: is a rear view of a headlight body;
- Fig. 8: is an enlarged view of the forward section of a motorcycle with a headlight body (another embodiment);
- Fig. 9: is a front view of the motorcycle;
- Fig. 10: is a rear view of the headlight body of the headlight of Fig. 8; and
- Fig. 11: shows the number of lead wires being reduced as the lead wires are bound to each other.

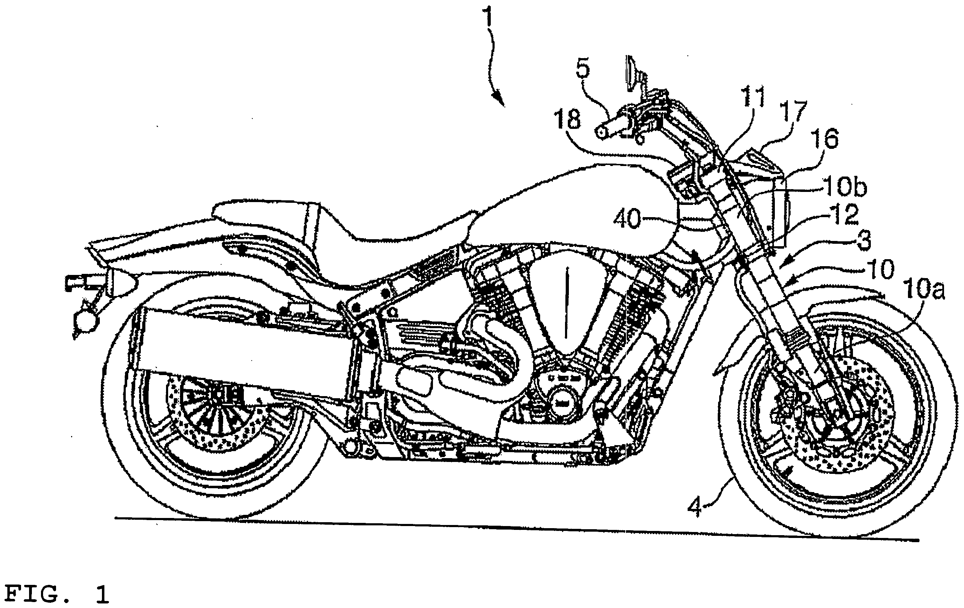

In Fig. 1, reference numeral 1 designates a motorcycle to which a headlight of this embodiment is applied, the structure of which is described schematically as follows. That is, a front fork 3 is supported, for leftward and rightward steering movement, by a head pipe 40 located at the forward end of a body frame of the motorcycle 1. A front wheel 4 is supported at the lower end of the front fork 3, and at the upper end, a steering handle 5 is supported fixedly through a handle holder. A headlight 16 is mounted near the front of the support section of the steering handle 5. Above the headlight 16 and near the front of the support section of the steering handle 5 is mounted a tachometer 17 and further, near the back of the support section of the steering handle 5, a speed meter 18.

The front fork 3 is a head-stand type telescopic fork provided with a pair of left and right fork bodies 10, 10 each having an inner tube 10a inserted for expansion and contraction in an outer tube 10b. The front wheel 4 is supported by the inner tube 10a at the lower end, and the upper part of the outer tube 10b is supported by the head pipe 40 of the body frame.

Upper ends of the outer tubes 10b of the left and right fork bodies 10 are connected to each other by a handle crown 11 and further, upper parts of the outer tubes 10a at positions a little higher than the vertical middle portions thereof are connected to each other by an underbracket 12, whereby the front fork 3 assumes the shape of a fork.

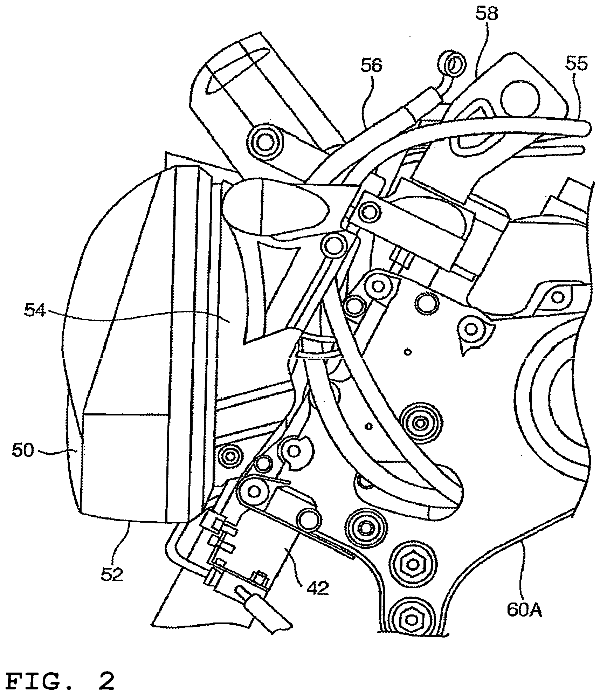

Fig. 2 is an enlarged view of the headlight section, which comprises a lens section 50 formed in a curved shape, a headlight body 52, and left and right covers 54 of the headlight body. Upper parts of the left and right covers are fixed to the handle crown 11, and the lower ends thereof to the underbracket 12. As a result, the headlight body is fixed to the vehicle body. Reference numeral 55 designates a harness for switches, 56 a clutch hose, 58 a handle support section, and 60A a body frame.

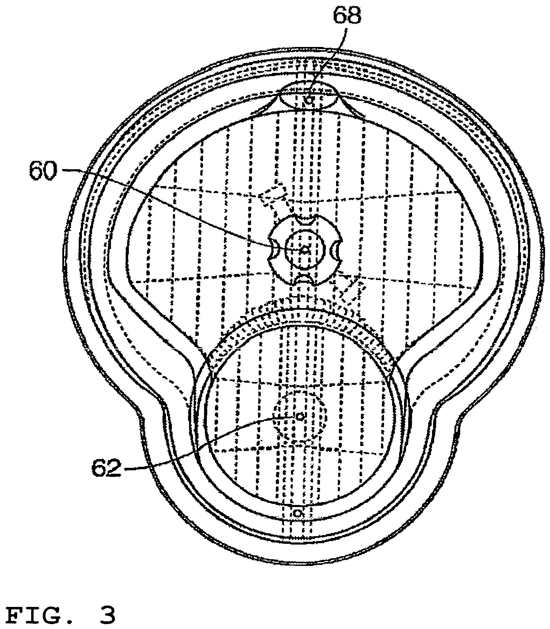

Fig. 3 is a front view of a whole headlight, in which a low beam bulb **60** (low beam bulb center) is provided at the center of the headlight body, and a high beam bulb **62** (high beam bulb center) below the low beam bulb. Further, above the low beam bulb is provided another position bulb **68** (position bulb center).

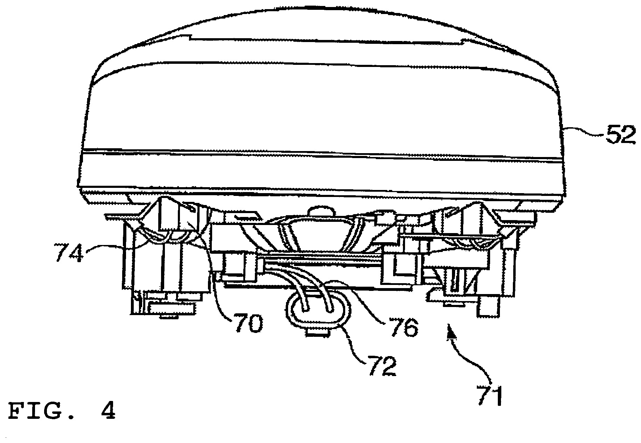

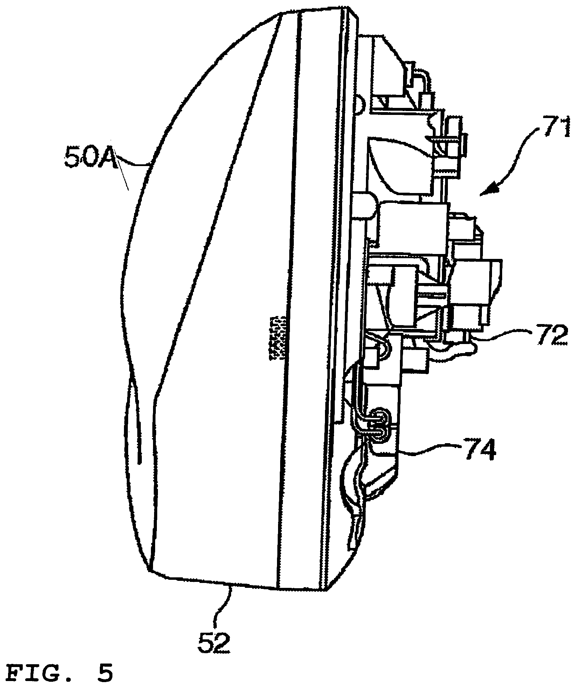

As shown in Fig. 4 and Fig. 5, the rear face of the headlight body assumes a complex irregular shape 71 such that lead wires 74, 76 from a socket 70, 72 of each bulb are laid toward a connector in a recess serving as an allowance portion for the wiring of the lead wires, to keep clear of the protruded regions.

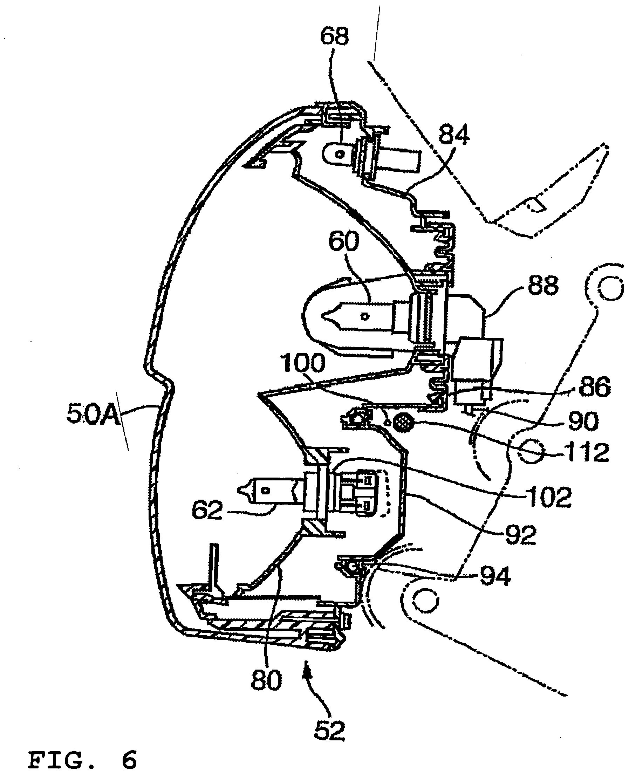

Fig. 6 is a sectional view of the whole headlight when it is cut through a plane parallel to the direction of movement of the vehicle. The headlight body 52 fulfils the function of fixing a lens **50A** at the front and fixing each bulb toward the lens in front. The headlight body is formed of a plurality of cover members. Reference numeral 80 designates a first cover forming the center of the headlight body, to which is fixed at the upper part a low beam bulb 60, and a high beam bulb 62 below the low beam bulb **60.**

To a cover designated by reference numeral 84, a position bulb 68 is fixed above a low beam bulb 82 as a main bulb. The cover 84 is protruded to a large extent in a curved shape from the rear face of the headlight body so as to cover the large low beam bulb **60,**
forming a protruded region. Here, the "main bulb" means a bulb which requires a protruded region having a largest area in the rear face of the headlight body, and it is not necessarily limited to a bulb for a low beam.

A cover designated by reference numeral 86 covers the low beam bulb around its electrodes, a socket 88 of the low beam bulb is protruded toward the vehicle body beyond the cover 86, and a two-pole lead wire 90 is led out downwardly from the socket. Reference numeral 92 designates a rear cover for covering the rear face of a socket of the high beam bulb. Joint portions between a plurality of covers are each provided with a sealing member 94. As described above, the rear face of the headlight body is formed with a complex irregular region by a plurality of covers.

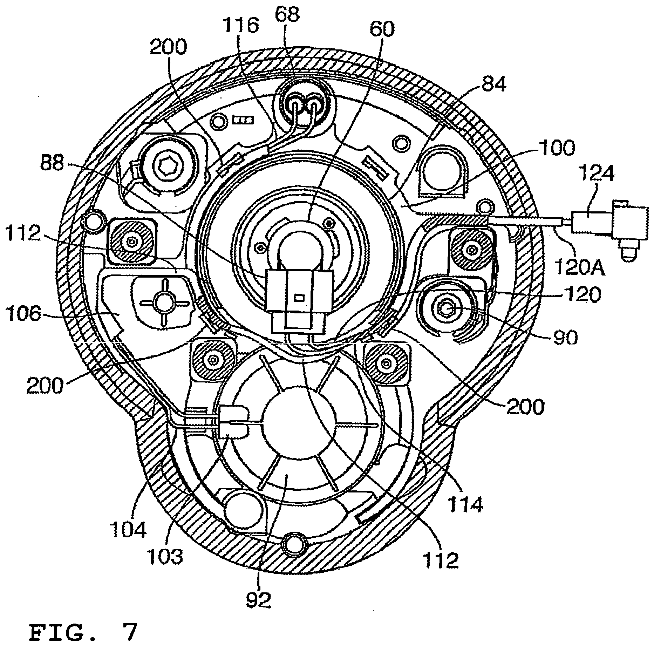

Fig. 7 is a rear view of the headlight body. The rear face of the headlight body assumes a complex irregular shape. Around a protruded portion formed by the cover 84 and having a largest area in this irregular shape, that is, on the periphery of the protruded portion is formed an annular allowance portion 100. The allowance portion 100 is formed in the shape of a recess compared with the protruded portion 84 (Fig. 6) and is very much suited for the winding of a collective line (harness), which is formed by lead wires of a plurality of bulbs being bound and collected as described later, and for the restriction of the direction of the winding. Here, "being bound" means that a plurality of lead wires are bundled up, in which case lead wires having a common terminal may be dispensed with, that is, a collective line (harness) is being formed while reducing the number of lead wires.

A pair of lead wires (electric lines) 104 are led out leftwardly in the figure from the cover 92 for covering a socket 102 (see Fig. 6) of the high beam bulb through a socket 103, running upwardly in a recessed portion 106 of the rear face of the headlight body along the left edge of the headlight body toward the low beam bulb 60. A collective line 112 formed of the pair of lead wires collected, is bent halfway approximately at a right angle toward the lower part of a case **(cover) 86** (protruded region) on the low beam bulb side, and while running in the annular recessed portion (allowance portion) 100 after reaching the case **(cover) 84** of the low beam bulb, it proceeds rightwardly in the figure along the recessed
portion. Here, a "recessed portion 106" means a flat portion between protruded regions and it need not be formed necessarily in the shape of a groove.

A pair of lead wires **120** run out from the socket 88 of the low beam bulb downwardly, which are bound further to the collective line 112 to form a collective line 114, and thereafter the collective line 114 is laid upwardly along the annular recessed portion (allowance portion) 100.

On the other hand, from the position bulb 68 above the low beam bulb 60, a pair of lead wires 116 run downwardly creeping in the annular recessed portion 100 and is bound to the collective line 112. To the end of the last collective line formed by all the lead wires bound together, is connected a connector 124, which connector is disposed in the direction perpendicular to the plane of the drawing (toward the vehicle body) and connected removably to contact points such as relays or connectors on the body side. In Fig. 7, numeral 200 designates a fixing member (clip) facing the annular allowance portion for fixing the collective line to the annular allowance portion 100. The collective line is fixed to the rear face of the headlight body by the clip for the prevention of drooping. A plurality of clips are provided in the middle of the annular recessed portion at given intervals. As described above, the collective line is disposed routing in the annular recessed portion toward the connector **124.** The collective line can be accommodated in the allowance portion **100** and its orientation can be restricted. In this way,
a plurality of lines can be laid while being bound together using allowance portions such as spaces or recesses of the irregular shape in the rear face of the headlight body, so that wiring can be arranged effectively in the rear face of the headlight body. As a result, the length of the collective line led out from the headlight body toward the vehicle body can be decreased, so that the headlight itself can be formed thinner than a conventional one and it can be fixed to the vehicle body so as to be closer to the steering handle.

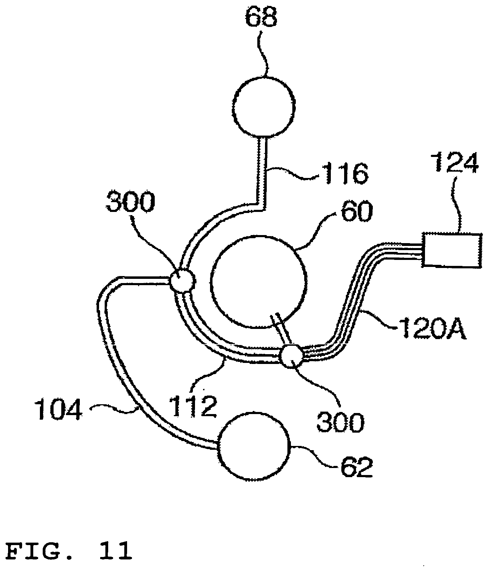

In addition, as shown in Fig. 11, the two lead wires 116 from the position light 68 are bound to the two lead wires 104 from the high beam bulb 62 to form a collective line 112 made up of three lead wires, to which are bound the two lead wires 120 of the low beam bulb to finally form a collective line 120A made up of four lead wires. As such, the effect is achieved that the total number of lead wires can be reduced by "binding." In Fig. 11, reference numeral 300 shows the connecting portion where a plurality of lead wires are bound together.

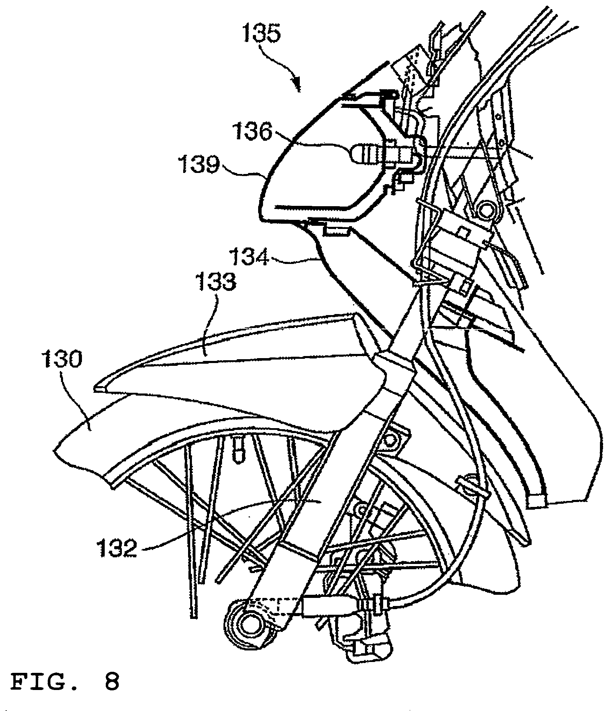

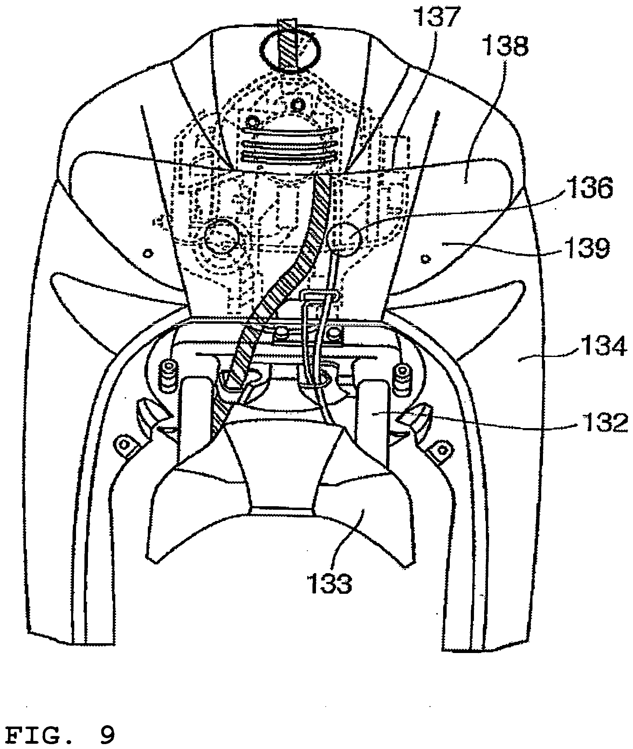

Now, an embodiment will be described in which a headlight is fixed to a cowling fastened to a vehicle body. This embodiment is described below with reference to the drawings. Fig. 8 and Fig. 9 are a side view and a front view showing respectively the structure of the forward section of a motorcycle with a headlight structure according to this embodiment. A front wheel 130 is mounted to left and right front forks 132 and a front fender 133 is attached thereabove. The front forks 132 are connected to a steering shaft of a steering handle. A body frame is formed by a head pipe for the steering shaft to be inserted therein, a main frame joined to the head pipe, and the like. There is provided a leg shield 134 for covering the front fender 133 at both the left and right sides and the upper side.

Centrally of the leg shield 134 above the front fender 133 is attached a headlight assembly 135. The headlight assembly 135 in this embodiment comprises a headlamp section 137 made up of two, left and right bulbs 136 and two flasher sections 138 on both left and right sides of the headlamp section, and its front is covered by a lens 139.

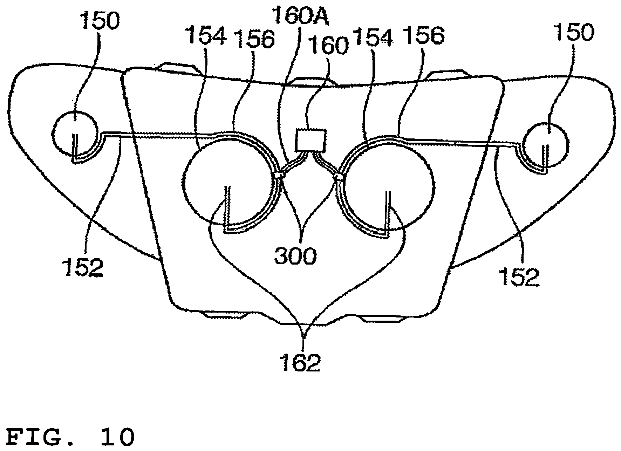

As shown in Fig. 10, lead wires 152 from the left and right flasher bulbs 150 are led to a **connector** 160, through recessed portions in the rear face of the headlight body, along recessed portions 156 around annular protruded portions on the rear face of left and right main bulbs 154. Lead wires 162 from the main bulbs run downwardly, then they are laid along the annular recessed portions toward **the** connector 160 above, and after being bound to the lead wires 152 from the flasher bulbs, they are connected to the connector.

The lead wires 162 (two wires) and the lead wires 152 (two wires) are bound to each other at a connecting portion 300 to form a collective line 106A made up of three lead wires, which arrangement is the same for the left and right bulbs.

Although in the foregoing embodiment, the low beam bulb and the high beam bulb are described as being separate parts, they may be integrated in one body. The number and positions of the position bulbs can be changed as appropriate.

Thus, as outlined above, in order to achieve the foregoing object, the inventor has studied about efficient wiring of lead wires from each bulb on the rear face of a headlight body. The headlight body has a relatively complex, irregular shape on the rear face to fix a plurality of bulbs toward a lens. In the past, lead wires from each bulb was extended directly toward the vehicle body to avoid formation of the complex irregular shape.

However, this structure raises the foregoing problems. Therefore, this embodiment comprises a headlight for astride riding type vehicles having a plurality of bulbs, a lens, and a headlight body for supporting said plurality of bulbs toward said lens, and configured such that said headlight body is fixed in front of a steering handle and lead wires from said bulbs are led out from said headlight body to be connected to electric contact points on a vehicle body, wherein in the rear face of said headlight body on the body side, there are provided a plurality of protruded regions for said bulbs to be accommodated in the headlight body; in an allowance portion which is on the periphery of a protruded region having a largest area and which does not interfere with other protruded regions, lead wires from a main bulb and those from other bulbs are disposed running in one direction, said plurality of lead wires being bound together to form a collective line; and a connector is coupled to the end of the collective line on said body side, so that the connector is connected to said electric contact points on the body side.

Studying the rear face of a conventional headlight body, around a protruded region having a largest area of a plurality of protruded regions, an allowance portion having an annular shape capable of receiving lead wires is formed in the shape differentiated from other protruded regions. In the embodiment, this allowance region is utilized and a collective line is formed while binding (bundling) up a plurality of lead wires, so that the collective line is accommodated in the region. Therefore, the headlight body can be formed thinner than that of prior arts, so that a headlight structure for motorcycles can be provided capable of effecting improvement in the operating property of a steering handle without intermingling with other lines even if the headlight body is fixed to a vehicle body so as to be closer to the steering handle.

According to the above discussed embodiment, the foregoing main bulb is a bulb for a low beam. In addition, there might be provided a position bulb in addition to the bulb for a low beam, and lead wires from the position bulb might be laid toward the foregoing allowance portion through a recess in the rear face of the headlight body. A bulb for a high beam might be located below the bulb for a low beam; and lead wires of the bulb for a high beam and those of the position bulb might be bound to each other to form a first collective line, which might be laid in the foregoing recess and might be bound to lead wires of the foregoing bulb for a low beam to form a second collective line, which might be laid along the allowance portion; lead wires of another position bulb might be also laid toward the second collective line using another recess; and these lines might be bound together to form a third collective line, to the end of which is connected the foregoing connector. Above the bulb for a low beam might be further provided another position bulb, and lead wires from the other position bulb are hung down along the allowance portion, which might be bound to the second collective line. A fixing piece for fixing the lead wires to the allowance portion might be provided at a position facing the allowance portion of the rear face of the headlight body. A common terminal might be used in binding a plurality of lead wires, so that the number of lead wires of the collective line is smaller than the number of all the lead wires.

Thus, according to a most preferred embodiment, in order to provide a headlight structure for astride riding type vehicles, particularly for motorcycles, capable of effecting improvement in the operating property of a steering handle without intermingling with other lines even if a headlight body is fixed to a vehicle body so as to be closer to a handle, in the rear face of a headlight body on the body side, there are provided a plurality of protruded regions for bulbs to be accommodated in the headlight body; in an allowance portion which is on the periphery of a protruded region having a largest area and which does not interfere with other protruded regions, lead wires from a main bulb and those from other bulbs are disposed running in one direction, the plurality of lead wires being bound together to form a collective line; and a connector is coupled to the end of the collective line on said body side, so that the connector is connected to electric contact points on the body side.

## Claims

1. Headlight for astride riding vehicles, in particular for motorcycles, having a headlight body (52) supporting at least one bulb (60,62,68,136,150,154), wherein the bulb (60,62,68,136,150,154) in the headlight body (52) is connected to an electric connector (124,160) on a vehicle body side by lead wires (104,120,116,152,162), **characterized in that** said lead wires (104,120, 116,152,162) being fixed to a rear face of the headlight body (52) in an allowance portion (100) being formed along a periphery of a protruded portion (84) on the rear side.

2. Headlight according to claim 1, **characterized in that** the headlight body (52) is fixed in front of a steering handle (5) and supports a plurality of bulbs (60,62,68,136,150,154) and a lens, wherein said headlight body (52) is adapted to support said plurality of bulbs (60,62,68,136,150,154) towards said lens, and wherein said lead wires (104,120,116,152,162) from said bulbs (60,62,68,136,150,154) are led out from said headlight body (52) to be connected to electric contact points on a vehicle body.

3. Headlight according to claim 1 or 2, **characterized in that** in the rear face of said headlight body (52), there are provided a plurality of protruded regions (84,86,92) for said bulbs (60,62,68) to be accommodated in the headlight body (52), and **in that** in the allowance portion (100) which is on the periphery of a protruded region (84) having a largest area and which does not interfere with other protruded regions (86,92), lead wires (120) from a main bulb (60) and those from other bulbs (62,68) are disposed running in one direction, said plurality of lead wires (104,120,116) being bound together to form a collective line (112,114), and the connector (124) is coupled to the end of the collective line (112,114) on said body side, so that the connector (124) is connected to said electric contact points on the body side.

4. Headlight according to claim 3, **characterized in that** said main bulb (60) is a bulb for a low beam.

5. Headlight according to claim 4, **characterized by a** position bulb (68) provided in addition to said bulb (60) for a low beam, wherein lead wires (116) from the position bulb (68) are laid toward said allowance portion (100) through a recessed portion in the rear face of said headlight body (52).

6. Headlight according to claim 5, **characterized in that** said position bulb (68) is provided above said bulb (60) for a low beam, wherein lead wires (116) from the position bulb (60) are hung downwardly along said allowance portion (100) and bound to said collective line (112,114).

7. Headlight according to one of the claims 1 to 6, **characterized by** a fixing piece (20) for fixing said lead wires (104,120,116) to said allowance portion (100), being provided at a position facing said allowance portion (100) in the rear face of said headlight body (52).

8. Headlight according to one of the claims 1 to 7, **characterized by** a common terminal used when the plurality of lead wires (104,120,116) are bound together, so that the number of lead wires (104,120,116) of the collective line (112,114) is smaller than that of all the lead wires (104,120,116).

## Patentansprüche

1. Scheinwerfer für Grätsch-Sitz-Fahrzeuge, insbesondere für Motorräder, der einen Scheinwerfer-Körper (52) hat, der zumindest eine Lampe (60, 62, 68, 136, 150, 154) lagert, wobei die Lampe (60, 62, 68, 136, 150, 154) in dem Scheinwerfer-Körper (52) mit einem elektrischen Verbinder (124, 160) an einer Fahrzeug-Körper-Seite durch Leitungs-Kabel (104, 120, 116, 152, 162) verbunden ist, **dadurch gekennzeichnet, dass** diese Leitungs-Kabel (104, 120, 116, 152, 162) an einer Rück-Fläche des Scheinwerfer-Körpers (52) in einem Zuleitungs-Abschnitt (100) fixiert sind, der entlang eines Umfangs eines vorspringenden Abschnitts (84) an der Rück-Seite ausgebildet ist.

2. Scheinwerfer gemäß Anspruch 1, **dadurch gekennzeichnet, dass** der Scheinwerfer-Körper (52) an einer Front einer Lenk-Stange (5) fixiert ist und eine Mehrzahl von Lampen (60, 62, 68, 136, 150, 154) und eine Licht-Scheibe lagert, wobei der Scheinwerfer-Körper (52) angepasst ist, um die Mehrzahl von Lampen (60, 62, 68, 136, 150, 154) zu diesen Licht-Scheiben zu lagern, und wobei diese Leitungs-Kabel (104, 120, 116, 152, 162) von diesen Lampen (60, 62, 68, 136, 150, 154) von diesem Scheinwerfer-Körper (52) herausgeführt sind, um mit Elektro-Kontakt-Punkten an einem Fahrzeugkörper verbunden zu werden.

3. Scheinwerfer gemäß Anspruch 1 oder 2, **dadurch gekennzeichnet, dass** an der Rück-Fläche von diesem Scheinwerfer-Körper (52) sind eine Mehrzahl von vorspringenden Bereichen (84, 86, 92) für diese Lampen (60, 62, 68), die in dem Scheinwerfer-Körper (52) aufgenommen sind, vorgesehen, und dass der Zuleitungs-Abschnitt (100), der an dem Umfang eines vorspringenden Bereichs (84) ist, der einen größten Bereich hat und der nicht mit anderen vorspringenden Bereichen (86, 92) überschneidet, Leitungs-Kabel (120) von einer Haupt-Lampe (60) und die von anderen Lampen (62, 68) sind angeordnet, um in eine Richtung zu verlaufen, diese Mehrzahl von Leitungs-Kabeln (104, 120, 116) sind zusammengebunden um eine kollektive Linie (112, 114) zu bilden, und der Verbinder (124) ist mit dem Ende der kollektiven Linie (112, 114) an dieser Körper-Seite gekoppelt, so dass der Verbinder (124) mit diesen Elektro-Kontakt-Punkten an der Körper-Seite verbunden ist.

4. Scheinwerfer gemäß Anspruch 3, **dadurch gekennzeichnet, dass** diese Haupt-Lampe (60) eine Lampe für ein Abblendlicht ist.

5. Scheinwerfer gemäß Anspruch 4, **gekennzeichnet durch** eine Positions-Lampe (68), die zusätzlich zu dieser Lampe (60) für ein Abblendlicht vorgesehen ist, wobei Leitungs-Kabel (116) von der Positions-Lampe (68) zu diesem Zuleitungs-Abschnitt (100) durch einen ausgenommenen Abschnitt in der Rück-Fläche von diesem Scheinwerfer-Körper (52) geführt sind.

6. Scheinwerfer gemäß Anspruch 5, **dadurch gekennzeichnet, dass** diese Positions-Lampe 68) oberhalb von dieser Lampe (60) für ein Abblendlicht vorgesehen ist, wobei Leitungs-Kabel (116) von der Positions-Lampe (60) nach unten hängend entlang diesen Zuleitungs-Abschnitt (100) und zu dieser kollektiven Linie (112, 114) gebunden sind.

7. Scheinwerfer gemäß zu einem von den Ansprüchen 1 bis 6, **gekennzeichnet durch** ein Fixierungs-Stück (20) zum Fixieren dieser Leitungs-Kabel (104, 120, 116) an diesem Zuleitungs-Abschnitt (100), das an einer Position, zugewandt zu diesem Zuleitungs-Abschnitt (100) in, der Rück-Fläche von diesem Scheinwerfer-Körper (52), vorgesehen ist.

8. Scheinwerfer gemäß einem der Ansprüche 1 bis 7, **gekennzeichnet durch** einen gemeinsamen Anschluss, der verwendet ist wenn die Mehrzahl von Leitungs-Kabeln (104, 120, 116) zusammengebunden sind, so dass die Anzahl von Leitungs-Kabeln (104, 120, 116) der kollektiven Linie (112, 114) kleiner als die von allen Leitungs-Kabeln (104, 120, 116) ist.

## Revendications

1. Phare avant pour des véhicules de type à enfourcher, en particulier pour des motocyclettes, comportant un corps de phare avant (52) supportant au moins une ampoule (60, 62, 68, 136, 150, 154), où l'ampoule (60, 62, 68, 136, 150, 154) dans le corps de phare avant (52) est connectée à un connecteur électrique (124, 160) côté corps de véhicule par des fils conducteurs (104, 120, 116, 152, 162), **caractérisé en ce que** lesdits fils conducteurs (104, 120, 116, 152, 162) sont fixés à une face arrière du corps de phare avant (52) dans une partie de réception (100) formée le long d'une périphérie d'une partie saillante (84) sur le côté arrière.

2. Phare avant selon la revendication 1, **caractérisé en ce que** le corps de phare avant (52) est fixé à l'avant d'un guidon (5) et supporte une pluralité d'ampoules (60, 62, 68, 136, 150, 154) et une lentille, où ledit corps de phare avant (52) est adapté pour supporter ladite pluralité d'ampoules (60, 62, 68, 136, 150, 154) en direction de ladite lentille, et où lesdits fils conducteurs (104, 120, 116, 152, 162) desdites ampoules (60, 62, 68, 136, 150, 154) passent hors dudit corps de phare avant (52) afin d'être connectés à des points de contact électrique sur une carrosserie du véhicule.

3. Phare avant selon la revendication 1 ou 2, **caractérisé en ce qu'**une pluralité de régions saillantes (84, 86, 92) sont prévues dans la face arrière dudit corps de phare avant (52) pour agencer lesdites ampoules (60, 62, 68) dans le corps de phare avant (52), et **en ce que** des fils conducteurs (120) d'une ampoule principale (60) et ceux d'autres ampoules (62, 68) sont disposés, de manière à s'étendre dans une seule direction, dans la partie de réception (100) qui se trouve à la périphérie d'une région saillante (84) ayant la plus grande superficie et qui n'empiète pas sur d'autres régions saillantes (86, 92), ladite pluralité de fils conducteurs (104, 120, 116) étant liés de manière à former une ligne commune (112, 114), et le connecteur (124) est couplé à l'extrémité de la ligne commune (112, 114) côté carrosserie, de sorte que le connecteur (124) est connecté auxdits points de contact électrique côté carrosserie.

4. Phare avant selon la revendication 3, **caractérisé en ce que** ladite ampoule principale (60) est une ampoule de feux de croisement.

5. Phare avant selon la revendication 4, **caractérisé par** une ampoule de feux de position (68) prévue en plus de ladite ampoule (60) de feux de croisement, où les fils conducteurs (116) provenant des feux de position (68) sont posés en direction de ladite partie de réception (100), à travers une partie renfoncée dans la face arrière dudit corps de phare avant (52).

6. Phare avant selon la revendication 5, **caractérisé en ce que** ladite ampoule de feux de position (68) est prévue au-dessus de ladite ampoule (60) de feux de croisement, où les fils conducteurs (116) provenant de ladite ampoule de feux de position (60) pendent vers le bas le long de ladite partie de réception (100) et sont liés à ladite ligne commune (112, 114).

7. Phare avant selon l'une des revendications 1 à 6, **caractérisé par** une pièce de fixation (20) pour fixer lesdits fils conducteurs (104, 120, 116) à ladite partie de réception (100), qui est prévue en un emplacement faisant face à ladite partie de réception (100) dans la face arrière dudit corps de phare avant (52).

8. Phare avant selon l'une des revendications 1 à 7, **caractérisé par** une borne commune utilisée lorsque la pluralité de fils de conducteur (104, 120, 116) sont reliés, de sorte que le nombre de fils conducteurs (104, 120, 116) de la ligne commune (112, 114) est inférieur à celui de tous les fils conducteurs (104, 120, 116).
